# FASCICULE DE BREVET EUROPEEN

(11) **EP 2 651 778 B1**
(45) Date de publication et mention de la délivrance du brevet: **11.05.2016**
(21) Numéro de dépôt: 11794072.6
(22) Date de dépôt: 24.11.2011
(51) Int. Cl.: B65D 85/804, A47J 31/40

(54) **CAPSULE POUR L'EXTRACTION D'UNE BOISSON SOUS PRESSION A TRONCONICITE VARIABLE**
KAPSEL MIT VARIABLER KEGELSTUMPFFORM ZUR EXTRAKTION EINES GETRÄNKES UNTER DRUCK
CAPSULE HAVING A VARIABLE FRUSTOCONICAL SHAPE FOR EXTRACTING A BEVERAGE UNDER PRESSURE

(30) Priorité: 16.12.2010 EP 10306436; 16.12.2010 EP 10306432; 01.06.2011 EP 11305679; 01.06.2011 EP 11305680; 09.06.2011 WO PCT/FR2011/051321; 09.06.2011 WO PCT/FR2011/051320; 14.06.2011 WO PCT/FR2011/051343; 14.06.2011 WO PCT/FR2011/051348
(43) Date de publication de la demande: 23.10.2013
(73) Titulaire: Frydman, Alain, 75008 Paris (FR)
(72) Inventeur: Frydman, Alain, 75008 Paris (FR)
(74) Mandataire: Blot, Philippe Robert Emile
(86) Numéro de dépôt international: PCT/EP2011/070986
(87) Numéro de publication internationale: WO 2012/079959

(56) Documents cités:
- EP-A1- 2 335 529
- WO-A1-2005/004683
- WO-A1-2005/080223
- WO-A1-2006/111807
- WO-A1-2010/137947
- WO-A2-2010/084475
- FR-A1- 2 617 389
- US-A1- 2010 239 734

## Description

La présente invention concerne une capsule pour l'extraction d'une boisson sous pression, du type comprenant une paroi latérale s'étendant suivant un axe, une paroi d'entrée de fluide fermant une première extrémité axiale de la paroi latérale, et une paroi de sortie de fluide fermant une deuxième extrémité axiale de la paroi latérale, les parois latérales, d'entrée et de sortie délimitant entre elles une chambre de réception d'une substance pour la préparation d'une boisson.

Une telle capsule est typiquement adaptée à la préparation de boissons sous pression telles que le café, le thé, le chocolat, etc.

On connaît de nombreuses capsules pour l'extraction d'une boisson sous pression. Ces capsules sont destinées à être insérées dans des machines de préparation de boisson, dans lesquelles un fluide d'extraction, généralement de l'eau, est injecté dans la capsule pour extraire la substance qu'elles contiennent. Le fluide d'extraction pénètre dans la capsule au travers de la paroi d'entrée, et en ressort, mélangé à la substance, par la paroi de sortie.

FR-A-2 373 999 décrit l'une de ces capsules.

Un des problèmes qui se pose avec ce type de capsule est de fournir des dispositifs d'extraction de boisson facilitant l'insertion et le positionnement de la capsule dans la machine, qui soit simple et peu coûteux.

WO-A-2005/004683 présente une solution à ce problème en proposant un dispositif d'extraction de boisson à chargement par gravité. L'utilisateur doit introduire la capsule dans des moyens de guidage du dispositif. La capsule descend le long de ces moyens de guidage, sous l'effet de son propre poids, jusqu'à être bloquée par des moyens de retenue de la capsule dans une position intermédiaire. L'utilisateur agit ensuite sur des moyens provoquant le déplacement d'une cage à capsule définissant un logement de réception de la capsule en position d'extraction. Au cours de ce déplacement, la cage à capsule vient emboîter la capsule et notamment coopère avec la paroi latérale de la capsule pour placer celle-ci en position d'extraction. La capsule passe ainsi en-dessous des organes de retenue et se retrouve prête à chuter dans un réservoir à capsules usagées une fois qu'elle aura été dégagée de la cage à capsule.

Cependant, il a été observé que, lorsqu'un tel dispositif d'extraction est utilisé avec des capsules de l'état de la technique, la résistance opposée par la capsule au déplacement de la cage à capsule est très importante. Il en résulte une usure accélérée des pièces du dispositif et une manipulation malaisée de la machine par l'utilisateur.

L'art antérieur est également divulgué dans les documents EP 2 335 529 et FR 2617389.

Un objectif de l'invention est de proposer une capsule adaptée pour offrir une faible résistance au déplacement de la cage à capsule, lorsque utilisée dans un dispositif d'extraction de boisson du type décrit ci-dessus.

A cet effet, l'invention a pour objet une capsule du type précité, caractérisée en ce que la paroi latérale comprend un premier et un deuxième tronçons présentant chacun une face extérieure tronconique centrée sur l'axe, la génératrice de la face extérieure du premier tronçon formant un premier angle avec ledit axe inférieur à un deuxième angle formé par la génératrice de la face extérieure du deuxième tronçon avec ce même axe, le premier tronçon étant plus proche de la première extrémité de la paroi latérale que le deuxième tronçon, les premier et deuxième tronçons étant accolés l'un à l'autre et se joignant l'un à l'autre le long d'une ligne de jonction, à sensiblement mi-distance des première et deuxième extrémités de la paroi latérale.

Dans des modes de réalisation préférés de l'invention, la capsule présente également l'une ou plusieurs des caractéristiques suivantes, prise(s) isolément ou suivant toute(s) combinaison(s) techniquement possible(s) :
- le premier tronçon définit la première extrémité de la paroi latérale et le deuxième tronçon définit la deuxième extrémité de la paroi latérale ;
- la ligne de jonction est comprise dans un plan sensiblement perpendiculaire à l'axe ;
- une face intérieure de la paroi latérale définit un épaulement annulaire à la jonction des premier et deuxième tronçons ;
- l'épaulement annulaire est orienté vers la paroi de sortie ;
- la face extérieure du deuxième tronçon s'inscrit dans le prolongement de la face extérieure du premier tronçon ;
- la différence entre les premier et second angles est comprise entre 0,1 ° et 12 ° ;
- le diamètre extérieur maximal du premier tronçon est inférieur à 90% du diamètre extérieur maximal du deuxième tronçon ;

L'invention a également pour objet un système d'extraction de boisson comprenant un dispositif d'extraction de boisson et une capsule telle que définie ci-dessus, le dispositif d'extraction comprenant un support à capsule et une cage à capsule, le support à capsule et la cage à capsule étant déplaçables l'un par rapport à l'autre entre une configuration d'ouverture du dispositif, dans laquelle le support à capsule et la cage à capsule sont écartés l'un de l'autre de sorte qu'il est possible d'insérer la capsule entre eux, et une configuration de fermeture du dispositif, dans laquelle le support à capsule et la cage à capsule sont rapprochés l'un de l'autre et définissent entre eux un logement de réception de la capsule en position d'extraction, la cage à capsule étant adaptée pour coopérer avec une paroi latérale de la capsule lors de son déplacement vers la configuration de fermeture, lorsque la capsule est décalée par rapport à sa position d'extraction, de façon à la placer dans sa position d'extraction.

Dans des modes de réalisation préférés de l'invention, le système d'extraction de boisson présente également l'une ou plusieurs des caractéristiques suivantes, prise(s) isolément ou suivant toute(s) combinaison(s) techniquement possible(s) :
- le dispositif d'extraction est un dispositif à chargement par gravité ;
- le dispositif d'extraction comprend des moyens de retenue de la capsule dans une position intermédiaire, décalée par rapport à la position d'extraction.
- la paroi latérale de la capsule est adaptée pour que la cage à capsule coopère exclusivement avec le deuxième tronçon pour placer la capsule en position d'extraction.

D'autres caractéristiques et avantages de l'invention apparaîtront plus clairement à la lecture de la description qui va suivre, donnée uniquement à titre d'exemple et faite en se référant aux dessins annexés, sur lesquels :
- la Figure 1 est une vue latérale en coupe d'une capsule selon l'invention,
- la Figure 2 est une vue latérale schématique en coupe partielle d'un système d'extraction de boisson selon l'invention, dans une première configuration,
- la Figure 3 est une vue similaire à la Figure 2, le système d'extraction de boisson étant dans une deuxième configuration,
- la Figure 4 est une vue latérale en coupe d'un système d'extraction de boisson de l'état de la technique, dans une configuration similaire à celle de la Figure 3, et
- la Figure 5 est une vue similaire à la Figure 2, le système d'extraction de boisson étant dans une troisième configuration.

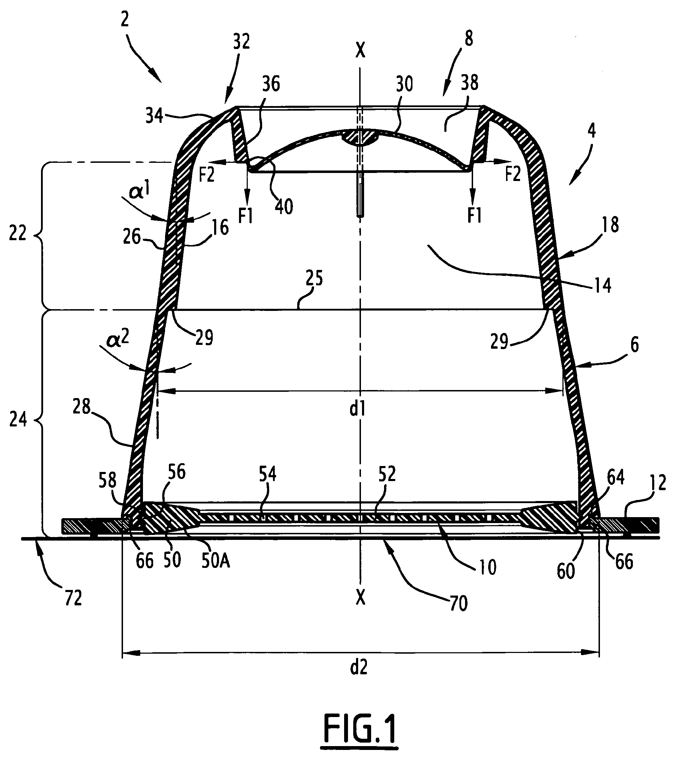

La capsule 2 illustrée sur la Figure 1 est propre à permettre l'extraction d'une boisson sous pression. La capsule 2 est propre à contenir une substance alimentaire à extraire sous pression.

La capsule 2 comprend une paroi latérale 6 s'étendant suivant un axe longitudinal X-X, une paroi d'entrée 8 fermant une première extrémité axiale arrière de la paroi latérale 6, et une paroi de sortie 10 fermant une deuxième extrémité axiale avant de la paroi latérale 6.

La capsule 2 comprend en outre un rebord 12 annulaire entourant l'extrémité avant de la paroi latérale 6 et s'étendant radialement vers l'extérieur à partir de la paroi latérale 6.

La paroi latérale 6, la paroi d'entrée 8 et la paroi de sortie 10 délimitent ensemble une chambre 14 de réception d'une substance alimentaire pour l'extraction d'une boisson, par exemple du café. La substance présente dans la capsule 2 n'est pas représentée sur les dessins pour des raisons de clarté.

La paroi d'entrée 8 est propre à permettre l'entrée d'un liquide d'extraction sous pression, de préférence de l'eau, et la paroi de sortie 10 est propre à permettre la sortie du liquide d'extraction après passage au travers de la substance contenue dans la capsule 2.

La paroi d'entrée 8 est monobloc et est venue de matière avec la paroi latérale 6. Les parois latérale 6 et d'entrée 8 définissent un corps 4 réalisé d'un seul tenant en forme de coupelle. La paroi latérale 6 et la paroi d'entrée 8 sont par exemple moulées par injection de matière plastique.

La paroi latérale 6 est sensiblement tronconique de révolution autour de l'axe longitudinal X-X. La paroi latérale 6 s'évase de son extrémité arrière vers son extrémité avant. La paroi latérale 6 est rigide. Elle présente une face intérieure 16 orientée vers la chambre 14, et une face extérieure 18 définissant une partie de la surface extérieure de la capsule 2.

La paroi latérale 6 comprend un premier tronçon 22 et un deuxième tronçon 24. Ces deux tronçons 22, 24, sont accolés l'un à l'autre. Ils se joignent l'un à l'autre le long d'une ligne de jonction 25 annulaire.

La ligne de jonction 25 est placée à sensiblement mi-distance des extrémités avant et arrière de la paroi latérale 6. Par « à sensiblement mi-distance », on comprend que la ligne de jonction 25 est comprise dans un tronçon de la paroi latérale 6 situé à équidistance des extrémités avant et arrière de celle-ci et s'étendant sur 33%, de préférence 20%, avantageusement 10%, de la hauteur de la paroi latérale 6, prise entre ses extrémités avant et arrière.

La ligne de jonction 25 est comprise dans un plan sensiblement perpendiculaire à l'axe X-X, c'est-à-dire faisant un angle inférieur à 10°, de préférence inférieur à 5°, avec un plan perpendiculaire à l'axe X-X.

Le premier tronçon 22 s'étend de l'extrémité arrière de la paroi latérale 6 jusqu'à la ligne de jonction 25. Le deuxième tronçon 22 s'étend de la ligne de jonction 25 jusqu'à l'extrémité avant de la paroi latérale 6.

Le premier tronçon 22, respectivement le deuxième tronçon 24 définit une première partie 26, respectivement une deuxième partie 28, de la face extérieure 18. Chaque partie 26, 28 est tronconique de révolution autour de l'axe X-X en s'évasant vers l'extrémité avant de la paroi latérale 6. La génératrice de la première partie 26 forme un premier angle α1 avec l'axe X-X inférieur à un deuxième angle α2 formé par la génératrice de la deuxième partie 28 avec l'axe X-X.

On notera que les angles α1, α2 sont entendus comme étant des angles aigus, c'est-à-dire inférieurs ou égaux à 90°.

La différence d'angle entre les premier et deuxième angles est comprise entre 0,1° et 12°, de préférence entre 2° et 6 °.

La deuxième partie 28 s'inscrit dans le prolongement de la première partie 26. En d'autres termes, la face extérieure 18 ne forme pas de décrochement à la jonction entre les première et deuxième parties 26, 28. La face extérieure 18 forme ainsi une surface dérivable en tout point le long de la ligne de jonction 25.

On définit un diamètre extérieur de chaque tronçon 22, 24 comme étant le diamètre du cercle formé par la face extérieure 18 de la paroi 6 lorsqu'elle coupée par un plan radial. La face extérieure 18 s'évasant vers l'avant, le diamètre extérieur de chaque tronçon 22, 24 atteint un maximum à l'extrémité du tronçon la plus proche de l'extrémité avant de la paroi latérale 6. On définit ainsi un premier diamètre extérieur maximal d₁ du premier tronçon 22 au niveau de la ligne de jonction 25, et un deuxième diamètre extérieur maximal d₂ du deuxième tronçon 24 au niveau de l'extrémité avant de la paroi latérale 6. Le premier diamètre maximal d₁ est inférieur à 90%, de préférence inférieur à 85%, du deuxième diamètre maximal d₂.

Le premier tronçon 22 a une épaisseur moyenne supérieure à l'épaisseur moyenne du deuxième tronçon 24. En particulier, à proximité de la ligne de jonction 25, le premier tronçon 22 a une épaisseur supérieure à celle du deuxième tronçon 24. Le passage du premier tronçon 22 au deuxième tronçon 24 se traduit donc par une brusque variation de l'épaisseur de la paroi latérale 6. La face intérieure 16 définit ainsi un épaulement annulaire 29 à la jonction des premier et deuxième tronçons 22, 24. L'épaulement annulaire 29 est orienté vers l'extrémité avant de la paroi latérale 6. La paroi latérale 6 est monobloc.

La paroi d'entrée 8 est étanche à l'air et à l'eau et est prévue pour se rompre sous l'effet d'un fluide sous pression à l'extérieur de la capsule 2.

La paroi d'entrée 8 comprend un dôme 30 central en forme de calotte sphérique. Le dôme 30 est à concavité orientée vers l'intérieur de la capsule 2. Le dôme s'étend transversalement à l'axe X-X. Le dôme 30 est déformable vers l'intérieur de la capsule 2 sous l'effet du fluide sous pression à l'extérieur de la capsule 2. Il est disposé en retrait vers l'intérieur de la capsule 2 par rapport à l'extrémité arrière de la capsule 2.

La paroi d'entrée 8 comprend une région périphérique 32 annulaire entourant le dôme 30. La région périphérique 32 délimite l'extrémité arrière de la capsule 8. Elle comprend une portion périphérique 34 annulaire et une portion axiale 36. La portion périphérique 34 entoure la portion axiale 36. La portion axiale 36 est tubulaire et s'étend axialement suivant l'axe X-X en rentrant vers l'intérieur de la capsule 2 à partir d'un bord interne de la portion périphérique 34. La portion axiale 36 est tronconique convergeant vers l'intérieur de la capsule 2. Le dôme 30 est fixé à l'extrémité axiale de la portion axiale 36 située vers l'intérieur de la capsule 2, orientée vers la paroi de sortie 10.

La portion axiale 36 et le dôme 30 délimitent dans la paroi d'entrée 8 un évidement 38 extérieur ouvert vers l'arrière et dont le fond est formé par le dôme 30 et la surface latérale par la portion axiale 36.

La paroi d'entrée 8 comprend une zone de moindre résistance 40 à la périphérie du dôme 30. La zone de moindre résistance 40 relie la périphérie du dôme 30 à la région périphérique 32, plus précisément à la portion axiale 36.

La zone de moindre résistance 40 est tubulaire et s'étend axialement suivant l'axe X-X. La zone de moindre résistance 40 se présente sous la forme d'une bande dont l'épaisseur, prise radialement à l'axe X-X, est inférieure à celle de la portion axiale 36. L'épaisseur de la zone de moindre résistance 40 est également inférieure à l'épaisseur moyenne du dôme 30. La zone de moindre résistance 40 prolonge axialement la portion axiale 36 et se raccorde à la périphérie du dôme 30.

Lorsqu'un fluide sous pression est amené sur la paroi d'entrée 8, le dôme 30 transmet une partie de l'effort axial à la zone de moindre résistance 40, qui est sollicitée en tension axialement comme illustré par les flèches F1 sur la Figure 1. Le dôme 30 tendant à s'écraser axialement en se dilatant radialement à sa périphérie sous l'effet de la pression, il sollicite également la zone de moindre résistance 40 radialement vers l'extérieur comme illustré par les flèches F2 sur la Figure 1. La zone de moindre résistance 40 est donc sollicitée axialement dans sa direction d'extension et en cisaillement dans sa direction de moindre épaisseur. Il en résulte que la zone de moindre résistance 40 rompt facilement sous une pression contrôlée.

Dans un mode de réalisation préféré, le dôme 30 est à action brusque et peut se retourner sous l'effet de la pression d'un fluide sur la paroi d'entrée 8. Le dôme 30 se retourne brusquement de façon que sa concavité s'inverse sous l'effet du fluide sous pression comme illustré en pointillés sur la Figure 1. Lorsqu'un fluide sous pression est amené sur la paroi d'entrée 8, le fluide exerce un effort sur le dôme 30. Le dôme 30 résiste jusqu'à une pression déterminée du fluide et se retourne brusquement de sorte que sa concavité s'inverse. En cas de retournement, le dôme 30 et la zone de moindre résistance 40 subissent des contraintes importantes qui provoquent des ruptures dans le dôme 30 et/ou dans la zone de moindre résistance 40. Les ruptures provoquées sont suffisantes pour laisser entrer l'eau de préparation de la boisson dans la capsule. La pression de retournement du dôme 30 peut être calibrée facilement ce qui permet de contrôler avec précision la pression d'entrée de l'eau et par conséquent la qualité d'extraction de la substance contenue dans la capsule 2.

La portion axiale 36 rentrante rigidifie la région périphérique 32 de la paroi d'entrée 8 ce qui permet de concentrer les contraintes dans le dôme 30 et la zone de moindre résistance 40.

Comme illustré sur la Figure 1, la paroi de sortie 10 est rapportée sur le corps 4. La paroi de sortie 10 et la surface interne 16 de la paroi latérale 6 comprennent des reliefs complémentaires d'encliquetage permettant d'encliqueter la paroi de sortie 10 dans l'extrémité avant de la paroi latérale 6.

La paroi de sortie 10 est de forme discoïdale. La paroi de sortie 10 comprend un cadre 50 périphérique et un filtre 52 s'étendant en travers du cadre 50 et comprenant des orifices 54 pour le passage de l'eau.

Les reliefs d'encliquetage comprennent une nervure de fixation 56 annulaire et une gorge de fixation 58 annulaire complémentaires, prévue l'une sur la paroi latérale 6 et l'autre sur le cadre 50. La nervure de fixation 56 est prévue pour s'encliqueter dans la gorge de fixation 58. La nervure de fixation 54 est ménagée sur la tranche 60 du cadre et la gorge de fixation 58 est ménagée dans la surface interne 16 de la paroi latérale 6.

Le cadre 50 est autoportant de façon à conserver sa forme et assurer l'encliquetage de la paroi de sortie 10 dans la paroi latérale 6. Le cadre 50 fait saillie vers l'avant par rapport à l'extrémité avant du corps 4 et notamment par rapport au rebord 12. Ainsi, le cadre 50 peut venir en appui contre un support d'un dispositif d'extraction.

Le cadre 50 est plus épais que le filtre 52. Le filtre 52 est ainsi disposé en retrait vers l'intérieur de la capsule 2 par rapport à une face externe 50A avant du cadre 50 tournée vers l'extérieur de la capsule 2. Ceci évite que le filtre 52 se déchire contre des reliefs d'un support d'un dispositif d'extraction propre à recevoir la capsule 2.

Les orifices 54 sont suffisamment petits pour retenir la substance, suffisamment nombreux pour laisser passer la boisson préparée, et de préférence répartis sur la surface du filtre 52 pour assurer une extraction correcte de la substance. Ils sont réalisés par moulage, ou percés dans le filtre 52, par exemple par laser. Dans un mode de réalisation préféré de l'invention, les orifices 54 forment un motif en spirale sur le filtre 52.

Comme représenté sur la Figure 1, le cadre 50 et le filtre 52 sont venus de matière. Ils sont par exemple réalisés en matière plastique moulée par injection.

En variante, le cadre 50 est rapporté sur le filtre 52, en étant par exemple surmoulé sur le filtre 52. Le filtre 52 est formé par exemple d'un filtre, d'un film percé ou d'un tissu, et est réalisé en matière plastique, en fibres naturelles, synthétiques ou métallique ou en métal. Le filtre 52 est par exemple un film en aluminium percé. Le cadre 50 est par exemple en matière plastique injectée sous pression. Une matière plastique formant le cadre 50 est par exemple différente d'une matière plastique formant le filtre 52. Le cadre 50 est réalisé dans une matière plastique permettant l'obtention d'un cadre rigide autoportant.

En option, la paroi de sortie 10 comprend des traverses de renfort s'étendant transversalement en travers du cadre 50. Les traverses de renfort sont venues de matière avec le cadre 50. Des traverses de renfort sont prévues sur la face externe du filtre 52 tournée vers l'extérieur de la capsule 2 et/ou la face interne du filtre 52 tournée vers l'intérieur de la capsule 2. De préférence, ces traverses de renfort forment une croix.

La paroi de sortie 10 peut être obtenue facilement et à faible coût. Ses orifices 54 calibrés permettent de contrôler la pression de sortie de la boisson. La capsule 2 est fabriquée facilement en remplissant le corps 4 avec la substance puis en fixant la paroi de sortie 10 mécaniquement sur le corps 4 par simple clipsage de la paroi de sortie 10 dans la paroi latérale 8. Cette opération de fixation est simple, fiable et facilement industrialisable à grande échelle. Le clipsage permet de compacter la substance.

Le rebord 12 est rapporté sur la paroi latérale 6. Le rebord 12 entoure l'extrémité avant ouverte de la paroi latérale 6 du corps 4. Le rebord 12 s'étend radialement vers l'extérieur à partir de la surface externe 16 de la paroi latérale 6. Il ne supporte pas d'élément d'étanchéité rapporté ou de relief d'étanchéité déformable.

Comme visible sur la Figure 1, la surface externe 18 de la paroi latérale 6 définit, à proximité de l'extrémité avant, un dégagement annulaire 64 dans lequel la bordure interne 66 du rebord 12 est engagée. Le rebord 12 est lié à la paroi latérale 6 sans s'étendre dans la chambre 14 et sans être en contact avec la substance contenue dans la capsule 2.

De préférence, la paroi latérale 6 et la paroi d'entrée 8 sont réalisées en un premier matériau plastique étanche à l'air et à l'eau. Le premier matériau plastique est choisi pour être inerte vis-à-vis de la substance contenue dans la capsule 2. Le premier matériau peut être translucide ou coloré dans la masse. De préférence, le premier matériau plastique est un plastique ou un alliage de plastiques qui n'interfère pas avec les produits alimentaires et constitue une barrière à l'air et à l'eau performante.

De préférence, le rebord 12 est constitué d'un deuxième matériau plastique, différent du premier matériau plastique. Le deuxième matériau plastique est préférentiellement choisi pour être un matériau de faible coût. Le deuxième matériau plastique est par exemple un élastomère thermoplastique (TPE) ou du polyuréthane (PU) qui sont des matériaux peu couteux.

De préférence, les premier et deuxième matériaux plastiques sont des matériaux compatibles, c'est-à-dire des matériaux adaptés pour polymériser l'un avec l'autre. Ainsi, il est possible de produire des capsules 2 à coût réduit. Ces capsules étant destinées à être produites en très grandes séries, cela permet de réaliser des économies importantes.

De préférence, le rebord 12 est surmoulé sur l'extrémité avant de la paroi latérale 6. En variante, le corps 4 et le rebord 12 sont formés par coinjection des premier et deuxième matériaux plastiques.

Le deuxième matériau peut être coloré dans la masse. Ainsi, il est possible de colorer différemment les rebords 12 de capsules 2 contenant différentes substances, de façon à distinguer aisément une capsule 2 contenant une première substance d'une autre capsule 2 contenant une deuxième substance, différente de la première.

La capsule 2 comprend une membrane 70 d'étanchéité recouvrant la paroi de sortie 10 pour fermer de manière étanche la capsule 2 à l'extrémité avant de la paroi latérale 6. La membrane 70 est fixée sur le rebord 12 sans être fixée sur la paroi de sortie 10. De préférence, un gaz inerte est piégé entre la membrane 70 et la paroi de sortie 10.

La membrane 70 est pelable de façon à pouvoir être retirée avant usage par un utilisateur. A cet effet, la membrane 70 comprend une languette 72 faisant saillie radialement vers l'extérieur de la capsule depuis le bord extérieur du rebord annulaire 12. Cette languette 72 permet une saisie facilitée de la languette 70 en vue de son pelage.

En variante, la membrane 70 est prévue pour se déchirer sous l'effet d'un fluide sous pression. Dans ce cas, elle comprend par exemple des lignes de faiblesse.

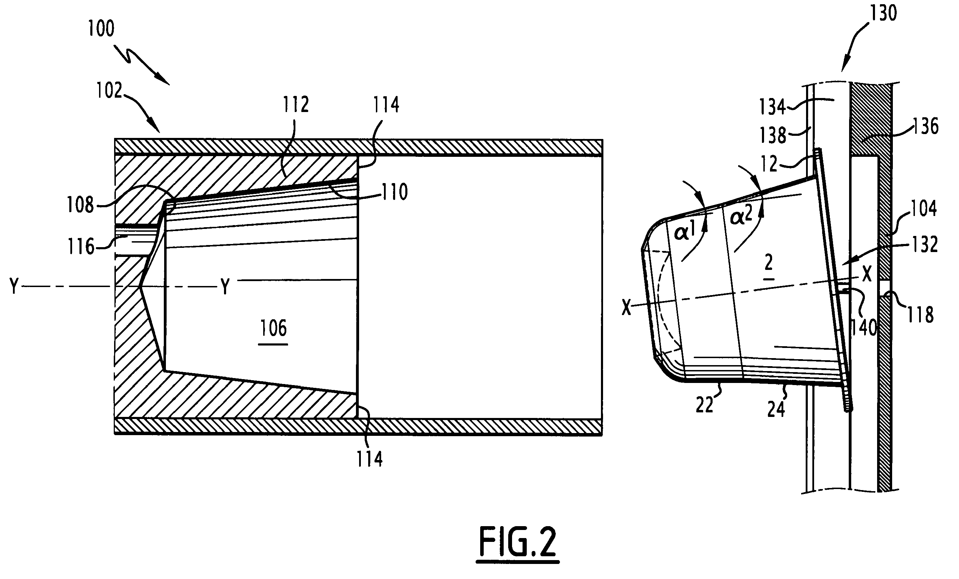

La capsule 2 est représentée sur les Figures 2, 3 et 5 insérée dans un dispositif 100 d'extraction de boisson. Le dispositif d'extraction 100 et la capsule 2 forment un système d'extraction de boisson.

Ce dispositif d'extraction 100 comprend une cage à capsule 102 et un support à capsule 104.

La cage à capsule 102 présente un évidement 106 ayant une forme complémentaire de celle du corps 4 de la capsule 2. L'évidement 106 s'étend suivant un axe Y-Y. Il est fermé à une première extrémité axiale arrière par une paroi de fond 108. A une deuxième extrémité axiale avant, l'évidement 106 débouche vers l'extérieur de la cage à capsule 102 au travers d'une ouverture 110.

La cage à capsule 102 comprend une paroi latérale 112 s'étendant vers l'avant, depuis la paroi de fond 108, autour de l'évidement 106. Elle définit à son extrémité avant un bord annulaire 114 entourant l'ouverture 110.

La cage à capsule 102 porte un conduit 116 d'amenée d'eau sous pression débouchant à l'intérieur de l'évidement 106. Le conduit 116 débouche axialement dans l'évidement 106. En variante, le conduit 116 débouche radialement dans le l'évidement 106.

L'axe Y-Y est sensiblement horizontal

Le support à capsule 104 est sensiblement plat. Il est destiné à servir d'appui à l'extrémité avant de la capsule 2. Il est orienté sensiblement perpendiculairement à l'axe Y-Y. Il comprend au moins un orifice 118 d'évacuation de la boisson.

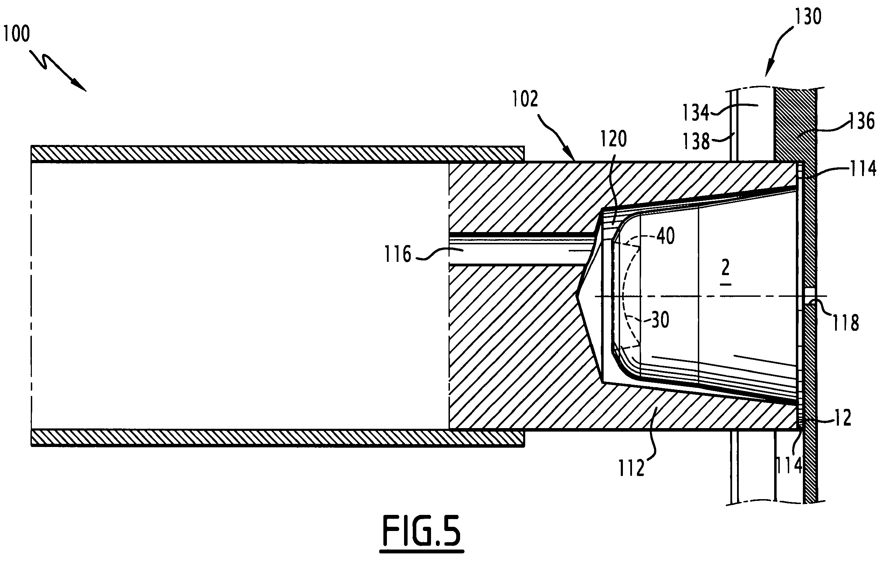

La cage à capsule 102 est déplaçable par rapport au support à capsule 104 suivant l'axe Y-Y entre une configuration ouverte du dispositif 100 (Figure 2), dans laquelle la cage 102 et le support 104 sont écartés l'un de l'autre de sorte qu'il est possible d'insérer la capsule 2 entre eux, et une configuration fermée du dispositif 100 (Figure 5), dans laquelle la cage 102 et le support 104 sont rapprochés l'un de l'autre et définissent entre eux un logement 120 de réception de la capsule 2 en position d'extraction. On notera que le logement 120 est constitué par l'évidement 106.

Le dispositif d'extraction 100 est à chargement par gravité, c'est-à-dire qu'il est adapté pour que la capsule 2 se positionne en position d'extraction sous le seul effet de son poids, sans manipulation particulière de l'utilisateur. Il comprend des moyens 130 de guidage de la capsule 2 d'une position d'introduction dans le dispositif 100 à sa position d'extraction, et des moyens 132 de retenue de la capsule 2 dans une position intermédiaire, entre ses positions d'introduction et d'extraction.

En position intermédiaire, la capsule 2 est décalée par rapport à sa position d'extraction, c'est-à-dire que l'axe de la capsule 2 en position intermédiaire n'est pas aligné sur l'axe de la capsule 2 en position d'extraction.

Les moyens de guidage 130 sont orientés sensiblement verticalement. Ils comprennent deux glissières 134 verticales disposées de part et d'autre de l'axe Y-Y. Les glissières 134 sont adaptées pour coopérer aves des portions diamétralement opposées du rebord 12 pour guider la capsule 2.

Chaque glissière 134 est délimitée entre deux rails 136, 138 verticaux. Un premier rail 136 s'étend dans le prolongement du support 104. Le deuxième rail 138 est disposé en retrait vers l'arrière par rapport au premier rail 136.

Les moyens de retenue 132 comprennent des organes en saillie 140 faisant saillie depuis le fond de chaque glissière 134. Les organes en saillie 140 sont disposés sensiblement dans le même plan horizontal. Le passage disponible pour la capsule 2 pour descendre le long des moyens de guidage 130 est localement plus étroit à hauteur des organes en saillie 140, qui peuvent ainsi bloquer la capsule 2 au cours de sa descente. En particulier, ces organes en saillie 140 sont adaptés pour coopérer avec le rebord annulaire 12 pour retenir la capsule 2 en position intermédiaire.

En fonctionnement, la membrane 70 est retirée et la capsule 2 est insérée dans dispositif 100. En particulier, des portions diamétralement opposées du rebord 12 sont insérées dans les glissières 134. La capsule 2 descend ensuite le long des moyens de guidage 130, jusqu'à être arrêtée par les moyens de retenue 132, comme représenté sur la Figure 2.

En position intermédiaire, les portions diamétralement opposées du rebord 12 reposent sur les organes en saillie 140. La capsule 2, sous l'effet de son centre de gravité décalé vers l'arrière, est inclinée vers l'arrière. Son axe X-X est incliné par rapport à son orientation lorsque la capsule 2 est en position d'extraction. D'autres portions du rebord 12 appuient sur le deuxième rail 138 pour empêcher un basculement complet de la capsule 2 vers l'arrière.

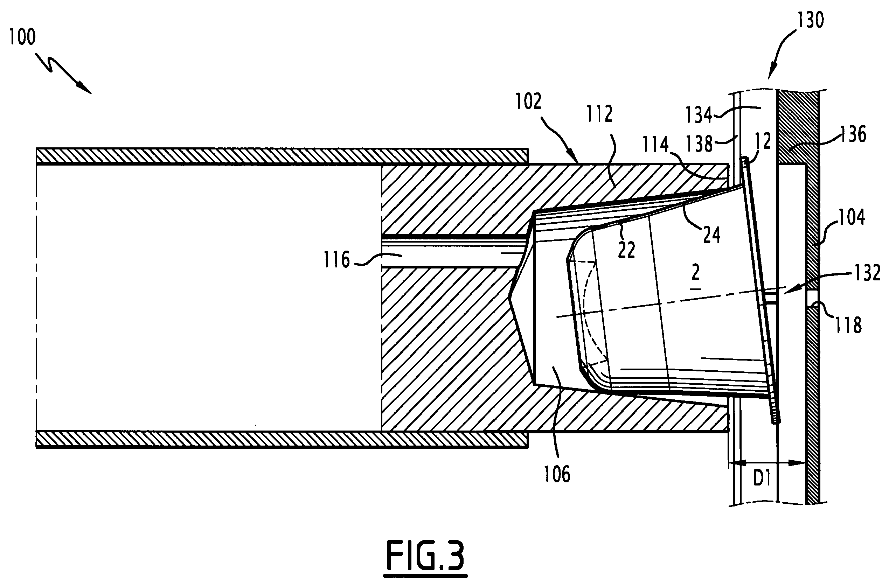

L'utilisateur actionne ensuite des moyens (non représentés) de fermeture du dispositif 100. Ces moyens entraînent la cage à capsule 102 en déplacement selon l'axe Y-Y, vers le support 104. Lors de ce déplacement, la cage 102 emboîte la capsule 2, c'est-à-dire que la capsule 2 vient se placer dans l'évidement 106. Lorsque la cage 102 est suffisamment avancée, le bord annulaire 114 vient prendre appui contre le deuxième tronçon 24 de la paroi latérale 6, comme visible sur la Figure 3. La cage à capsule 102 coopère alors avec le deuxième tronçon 24 pour placer la capsule 2 en position d'extraction.

En particulier, le bord annulaire 114 appuie contre le deuxième tronçon 24 lors du déplacement de la cage 102 vers l'avant. Cet appui se traduit par une force verticale exercée par la cage 102 sur le deuxième tronçon 24, qui pousse la capsule 2 vers le bas. La capsule 2 est ainsi descendue de force et le rebord 12 passe en-dessous des moyens de retenue 132. La capsule 2 est alors alignée avec sa position d'extraction. La cage à capsule 102 n'a plus qu'à continuer à avancer pour amener l'extrémité avant de la capsule 2 en appui contre le support 104.

On notera que, lors du passage de la capsule 2 de la position intermédiaire à la position d'extraction, la cage 102 coopère exclusivement avec le deuxième tronçon 24. En particulier, la cage 102 ne coopère pas avec le premier tronçon 22, qui n'est pas touché par la cage 102.

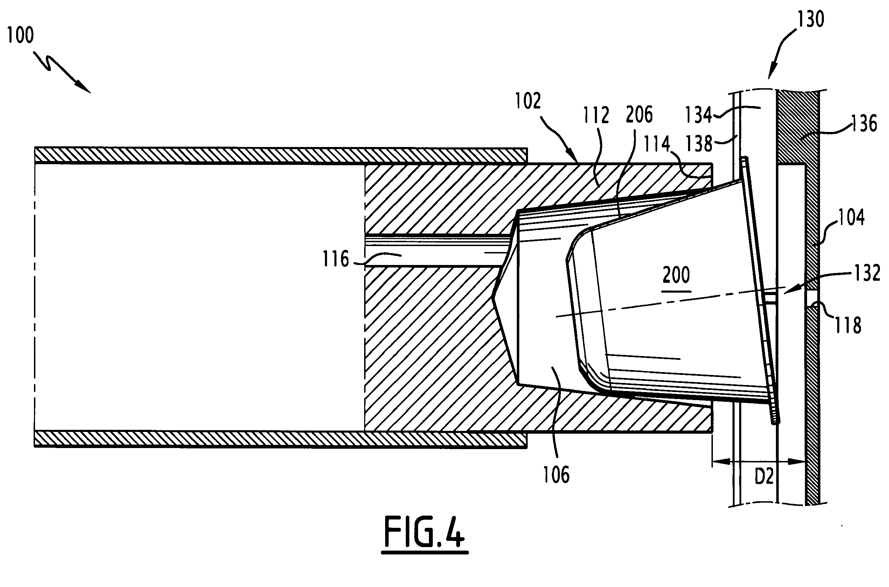

On remarquera également que, grâce à la forme particulière de la face extérieure 18 de la paroi latérale 6, l'entrée en contact de la cage 102 avec la capsule 2 se produit tardivement. Ceci est particulièrement visible lorsque l'on compare les Figures 3 et 4, la Figure 4 représentant une capsule de l'état de la technique 200 introduite dans le même dispositif d'extraction 100, le dispositif d'extraction 100 étant en configuration d'entrée en contact de la cage 102 avec la capsule 200. La paroi latérale 206 de cette capsule 200 présente en tout point sensiblement la même tronconicité. Or, comme visible sur les Figures 3 et 4, la distance D2 séparant le bord annulaire 114 du support 104 dans le cas de l'utilisation de la capsule 200 est supérieure à la distance D1 séparant le bord annulaire 114 du support 104 dans le cas de l'utilisation de la capsule 2.

La distance restant à parcourir à la cage 102 après être entrée en contact avec la capsule 2 étant plus court, la résistance exercée par la capsule 2 sur la cage 102 est donc plus faible. Il en résulte une manipulation plus aisée du dispositif d'extraction 100 par l'utilisateur, qui ne doit pas forcer sur les moyens de fermeture pour fermer le dispositif 100. En outre, la longévité du dispositif 100 est accrue.

En référence à la Figure 5, une fois la capsule 2 en position d'extraction, de l'eau est amenée sous pression dans le logement 120. L'eau sous pression exerce une pression sur le dôme 30. Sous l'effet de cette pression, le dôme 30 sollicite la zone de moindre résistance 40 axialement en traction et radialement en cisaillement. La zone de moindre résistance 40 rompt sous l'effet de cette sollicitation. L'eau traverse la substance contenue dans la capsule, puis ressort par la paroi de sortie 10 au travers du filtre 52.

Dans le cas d'un dôme à action brusque, le dôme 30 peut se retourner lorsque la pression de retournement du dôme 30 est atteinte et la paroi d'entrée 8 se rompt.

Le cadre 50 de la paroi de sortie 10 est en appui sur le support 104 et n'est pas délogé de la paroi latérale 6 sous l'effet de la pression de l'eau. Le filtre 52 est en retrait vers l'intérieur de la capsule 2 par rapport au cadre 50 et ne se déchire par sur le support 104. Il en résulte que les conditions de sortie de la boisson qui dépendent notamment du nombre d'orifices 54 et de leur section, sont maîtrisées.

L'invention s'applique aux capsules pour l'extraction de café sous pression et à des capsules pour l'extraction d'autres boissons sous pression, telle que le thé, le chocolat, etc. Ainsi, l'invention concerne de manière générale une capsule pour l'extraction d'une boisson sous pression.

## Revendications

1. Capsule (2) pour l'extraction d'une boisson sous pression, comprenant une paroi latérale (6) s'étendant suivant un axe (X-X), une paroi d'entrée de fluide (8) fermant une première extrémité axiale de la paroi latérale (6), et une paroi de sortie de fluide (10) fermant une deuxième extrémité axiale de la paroi latérale (6), telles que :
- la paroi latérale (6), la paroi d'entrée (8) et la paroi de sortie (10) délimitent entre elles une chambre (14) de réception d'une substance pour la préparation d'une boisson,
- la paroi latérale (6) s'évase depuis sa première extrémité vers sa deuxième extrémité,
la paroi latérale (6) comprenant un premier (22) et un deuxième (24) tronçons présentant chacun une face extérieure tronconique (26, 28) de révolution autour de l'axe (X-X) en s'évasant vers la deuxième extrémité de la paroi latérale (6), **caractérisée en ce que**
la génératrice de la face extérieure (26) du premier tronçon (22) forme un premier angle (α1) avec ledit axe (X-X) inférieur à un deuxième angle (α2) formé par la génératrice de la face extérieure (28) du deuxième tronçon (24) avec ce même axe (X-X), le premier tronçon (22) étant plus proche de la première extrémité de la paroi latérale (6) que le deuxième tronçon (24), les premier et deuxième tronçons (22, 24) étant accolés l'un à l'autre et se joignant l'un à l'autre le long d'une ligne de jonction (25), à sensiblement mi-distance des première et deuxième extrémités de la paroi latérale (6).

2. Capsule (2) selon la revendication 1, **caractérisée en ce que** le premier tronçon (22) définit la première extrémité de la paroi latérale (6) et le deuxième tronçon (24) définit la deuxième extrémité de la paroi latérale (6).

3. Capsule (2) selon la revendication 1 ou 2, **caractérisée en ce que** la ligne de jonction (25) est comprise dans un plan sensiblement perpendiculaire à l'axe (X-X).

4. Capsule (2) selon l'une quelconque des revendications précédentes, **caractérisée en ce qu'**une face intérieure (16) de la paroi latérale (6) définit un épaulement annulaire (29) à la jonction des premier et deuxième tronçons (22, 24).

5. Capsule (2) selon la revendication 4, **caractérisée en ce que** l'épaulement annulaire (29) est orienté vers la paroi de sortie (10).

6. Capsule (2) selon l'une quelconque des revendications précédentes, **caractérisée en ce que** la face extérieure (28) du deuxième tronçon (24) s'inscrit dans le prolongement de la face extérieure (26) du premier tronçon (22).

7. Capsule (2) selon l'une quelconque des revendications précédentes, **caractérisée en ce que** la différence entre les premier et second angles (α1, α2) est comprise entre 0,1° et 12°.

8. Capsule (2) selon l'une quelconque des revendications précédentes, **caractérisée en ce que** le diamètre extérieur maximal (d₁) du premier tronçon (22) est inférieur à 90% du diamètre extérieur maximal (d₂) du deuxième tronçon (24).

9. Système d'extraction de boisson comprenant un dispositif (100) d'extraction de boisson et une capsule (2), le dispositif d'extraction (100) comprenant un support à capsule (104) et une cage à capsule (102), le support à capsule (104) et la cage à capsule (102) étant déplaçables l'un par rapport à l'autre entre une configuration d'ouverture du dispositif (100), dans laquelle le support à capsule (104) et la cage à capsule (102) sont écartés l'un de l'autre de sorte qu'il est possible d'insérer la capsule (2) entre eux, et une configuration de fermeture du dispositif (100), dans laquelle le support à capsule (104) et la cage à capsule (102) sont rapprochés l'un de l'autre et définissent entre eux un logement (120) de réception de la capsule (2) en position d'extraction, la cage à capsule (102) étant adaptée pour coopérer avec une paroi latérale (6) de la capsule (2) lors de son déplacement vers la configuration de fermeture, lorsque la capsule (2) est décalée par rapport à sa position d'extraction, de façon à la placer dans sa position d'extraction, **caractérisé en ce que** la capsule (2) est une capsule selon l'une quelconque des revendications précédentes.

10. Système de préparation de boisson selon la revendication 9, **caractérisé en ce que** le dispositif d'extraction (100) est un dispositif à chargement par gravité.

11. Système de préparation de boisson selon la revendication 10, **caractérisée en ce que** le dispositif d'extraction (100) comprend des moyens (132) de retenue de la capsule (2) dans une position intermédiaire, décalée par rapport à la position d'extraction.

12. Système de préparation de boisson selon l'une quelconque des revendications 9 à 11, **caractérisé en ce que** la paroi latérale (6) de la capsule (2) est adaptée pour que la cage à capsule (102) coopère exclusivement avec le deuxième tronçon (24) pour placer la capsule (2) en position d'extraction.

## Patentansprüche

1. Kapsel (2) für die Extraktion eines Getränks unter Druck, umfassend eine Seitenwand (6), die sich gemäß einer Achse (X-X) erstreckt, eine Fluideingangswand (8), welche ein erstes axiales Ende der Seitenwand (6) verschließt, und eine Fluidausgangswand (10), welche ein zweites axiales Ende der Seitenwand (6) verschließt, so dass:
- die Seitenwände (6), die Eingangswand (8) und die Ausgangswand (10) zwischen sich eine Aufnahmekammer (14) einer Substanz für die Zubereitung eines Getränks begrenzen,
- sich die Seitenwand (6) ab ihrem ersten Ende zu ihrem zweiten Ende erweitert,
wobei die Seitenwand (6), die einen ersten (22) und einen zweiten (24) Abschnitt umfasst, von denen jeder eine Außenfläche aufweist (26, 28), die um die Achse (X-X) kegelstumpfförmig ist, indem sie sich zum zweiten Ende der Seitenwand (6) erweitert,
**dadurch gekennzeichnet, dass** die Mantellinie der Außenfläche (26) des ersten Abschnitts (22) mit der Achse (X-X) einen ersten Winkel (α1) bildet, der kleiner als ein zweiter Winkel (α2) ist, der von der Mantellinie der Außenfläche (28) des zweiten Abschnitts (24) mit dieser selben Achse (X-X) gebildet wird, wobei der erste Abschnitt (22) näher am ersten Ende der Seitenwand (6) ist als der zweite Abschnitt (24), wobei der erste und zweite Abschnitt (22, 24) aneinandergereiht sind und sich entlang einer Verbindungslinie (25) in etwa halbem Abstand vom ersten und zweiten Ende der Seitenwand (6) verbinden.

2. Kapsel (2) nach Anspruch 1, **dadurch gekennzeichnet, dass** der erste Abschnitt (22) das erste Ende der Seitenwand (6) definiert und der zweite Abschnitt (24) das zweite Ende der Seitenwand (6) definiert.

3. Kapsel (2) nach Anspruch 1 oder 2, **dadurch gekennzeichnet, dass** sich die Verbindungslinie (25) in einer zur Achse (X-X) etwa senkrechten Ebene befindet.

4. Kapsel (2) nach einem der vorangehenden Ansprüche, **dadurch gekennzeichnet, dass** eine Innenfläche (16) der Seitenwand (6) an der Verbindung des ersten und zweiten Abschnitts (22, 24) einen ringförmigen Absatz (29) definiert.

5. Kapsel (2) nach Anspruch 4, **dadurch gekennzeichnet, dass** der ringförmigen Absatz (29) zur Ausgangswand (10) ausgerichtet ist.

6. Kapsel (2) nach einem der vorangehenden Ansprüche, **dadurch gekennzeichnet, dass** die Außenfläche (28) des zweiten Abschnitts (24) die Verlängerung der Außenfläche (26) des ersten Abschnitts (22) bildet.

7. Kapsel (2) nach einem der vorangehenden Ansprüche, **dadurch gekennzeichnet, dass** die Differenz zwischen dem ersten und zweiten Winkel (α1, α2) zwischen 0,1° und 12° inklusive ist.

8. Kapsel (2) nach einem der vorangehenden Ansprüche, **dadurch gekennzeichnet, dass** der maximale Außendurchmesser (d₁) des ersten Abschnitts (22) 90 % kleiner ist als der maximale Außendurchmesser (d₂) des zweiten Abschnitts (24).

9. System für die Extraktion eines Getränks, umfassend eine Getränke-Extraktionsvorrichtung (100) und eine Kapsel (2), wobei die Extraktionsvorrichtung (100) einen Kapselhalter (104) und einen Kapselkäfig (102) umfasst, wobei der Kapselhalter (104) und der Kapselkäfig (102) zwischen einer Öffnungskonfiguration der Vorrichtung (100), in welcher der Kapselhalter (104) und der Kapselkäfig (102) voneinander derart beabstandet sind, dass es möglich ist, die Kapsel (2) zwischen ihnen einzusetzen, und einer Verschlusskonfiguration der Vorrichtung (100), in welcher der Kapselhalter (104) und der Kapselkäfig (102) einander angenähert sind und zwischen sich eine Empfangsaufnahme (120) der Kapsel (2) in Extraktionsposition definieren, im Verhältnis zueinander verlagerbar sind, wobei der Kapselkäfig (102) ausgebildet ist, um bei seiner Verlagerung in die Verschlusskonfiguration mit einer Seitenwand (6) der Kapsel (2) derart zusammenzuwirken, wenn die Kapsel (2) in Bezug auf ihre Extraktionsposition versetzt ist, dass sie in ihre Extraktionsposition platziert wird, **dadurch gekennzeichnet, dass** die Kapsel (2) eine Kapsel nach einem der vorangehenden Ansprüche ist.

10. System für die Zubereitung eines Getränks nach Anspruch 9, **dadurch gekennzeichnet, dass** die Extraktionsvorrichtung (100) eine Ladevorrichtung durch Schwerkraft ist.

11. System für die Zubereitung eines Getränks nach Anspruch 10, **dadurch gekennzeichnet, dass** die Extraktionsvorrichtung (100) Haltemittel (132) der Kapsel (2) in einer Übergangsposition umfasst, die in Bezug auf die Extraktionsposition versetzt ist.

12. System für die Zubereitung eines Getränks nach einem der Ansprüche 9 bis 11, **dadurch gekennzeichnet, dass** die Seitenwand (6) der Kapsel (2) ausgebildet ist, damit der Kapselkäfig (102) ausschließlich mit dem zweiten Abschnitt (24) zusammenwirkt, um die Kapsel (2) in Extraktionsposition zu platzieren.

## Claims

1. A capsule (2) for extracting a pressurized beverage, comprising a side wall (6) extending along an axis (X-X), a fluid inflow wall (8) closing a first axial end of the side wall (6), and a fluid outflow wall (10) closing a second axial end of the side wall (6), such that:
- the side wall (6), the inflow wall (8) and the outflow wall (10) delimit between them a chamber (14) for receiving a substance for preparing a beverage,
- the side wall (6) is flared from his first end to its second end,
the side wall (6) comprising a first (22) and second (24) segments each having an axisymmetrical outer frusto-conical face (26, 28) around the axis (X-X) by flaring towards the second end of the side wall (6), **characterized in that** the generatrix of the outer face (26) of the first segment (22) forms a first angle (α1) with said axis (X-X) less than a second angle (α2) formed by the generatrix of the outer face (28) of the second segment (24) with this same axis (X-X), the first segment (22) being closer to the first end of the side wall (6) than the second segment (24), the first and second segments (22, 24) being adjacent to each other and adjoining out with each other along a junction line (25), and substantially at a half distance from the first and second ends of the side wall (6).

2. The capsule (2) according to claim 1, **characterized in that** the first segment (22) defines the first end of the side wall (6) and the second segment (24) defines the second end of the side wall (6)

3. The capsule (2) according to claim 1 or 2, **characterized in that** the junction line (25) is comprised in a plane substantially perpendicular to the (X-X) axis.

4. The capsule (2) according to any of the preceding claims, **characterized in that** one inner face (16) of the side wall (6) defines a ring-shaped shoulder (29) at the junction of the first and second segments (22, 24).

5. The capsule (2) according to claim 4, **characterized in that** the ring-shaped shoulder (29) is oriented towards the outflow wall (10).

6. The capsule (2) according to any of the preceding claims, **characterized in that** the outer face (28) of the second segment (24) is included in the extension of the outer face (26) of the first segment (22).

7. The capsule (2) according to any of the preceding claims, **characterized in that** the difference between the first and second angles (α1, α2) is comprised between 0.1° and 12°.

8. The capsule (2) according to any of the preceding claims, **characterized in that** the maximum outer diameter (d₁) of the first segment (22) is less than 90% of the maximum outer diameter (d₂) of the second segment (24).

9. A beverage extraction system comprising a device (100) for extracting a beverage and a capsule (2), the extraction device (100) comprising a capsule support (104) and a capsule cage (102) being displaceable relatively to each other between a configuration for opening the device (100), in which the capsule support (104) and the capsule cage (102) are separated from each other so that it is possible to insert the capsule (2) between them, and a configuration for closing the device (100), in which the capsule support (104) and the capsule cage (102) are moved closer to each other and define between them a housing (120) for receiving the capsule (2) in an extraction position, the capsule cage (102) being adapted for cooperating with a side wall (6) of the capsule (2) upon its displacement towards the closing configuration, when the capsule (2) is shifted from its extraction position, so as to place it in its extraction position, **characterized in that** the capsule (2) is a capsule according to any of the preceding claims.

10. The system for preparing a beverage according to claim 9, **characterized in that** the extraction device (100) is a device loaded by gravity.

11. The system for preparing a beverage according to claim 10, **characterized in that** the extraction device (100) comprises means (132) for retaining the capsule in an intermediate position, shifted relatively to the extraction position.

12. The system for preparing a beverage according to any of claims 9 to 11, **characterized in that** the side wall (6) of the capsule (2) is adapted in order that the capsule cage (102) exclusively cooperates with the second segment (24) for placing the capsule (2) in the extraction position.
